# EUROPEAN PATENT APPLICATION

(11) **EP 1 689 066 A2**
(43) Date of publication of application: **09.08.2006**
(21) Application number: 05028561.8
(22) Date of filing: 28.12.2005
(51) Int. Cl.: H02K 1/27, H02K 15/03

(54) **Synchronous motor with innner permanent magnet rotor and method for manufacturing the same**

(30) Priority: 02.02.2005 KR 2005009632
(71) Applicant: LG Electronics Inc., Yongdungpo-gu Seoul (KR)
(72) Inventor: Kim, Ji-Woong, Seoul (KR); Chin, Sim-Won, Yangcheon-gu Seoul (KR)
(74) Representative: Vossius & Partner

(57) **Abstract**

Disclosed herein are an interior permanent magnet motor and a method for manufacturing the same. The interior permanent magnet motor includes a rotor core, which is formed by laminating a plurality of rotor core pieces (30). Each of the rotor core pieces (30) is centrally drilled with a shaft hole (34). Also, a plurality of magnetic holes (32) are drilled around the shaft hole (34) so that they are centrally bulged toward the shaft hole (34). Both ends (36) of the magnetic holes (32), arranged face to face, have asymmetrical shapes.

## Description

The present invention relates to an interior permanent magnet synchronous motor. More particularly, the present invention relates to an interior permanent magnet synchronous motor in which a plurality of magnetic holes are drilled in a rotor core, and both ends of the respective facingmagnetic holes have asymmetrical shapes, and a method for manufacturing the same.

An interior permanent magnet synchronous motor is configured such that a plurality of permanent magnets are embedded in a rotor. This kind of motor employs reluctance torque as well as magnet torque, and prevents the plurality of permanent magnets from being scattered during a high-speed rotation. Accordingly, the interior permanent magnet synchronous motor exhibits enhanced operation efficiency as compared to a surface mounted permanent magnet motor in which permanent magnets are attached to the surface of a rotor to produce a magnetic field. For this reason, nowadays, the interior permanent magnet synchronous motor is widely used as a high-speed drive motor.

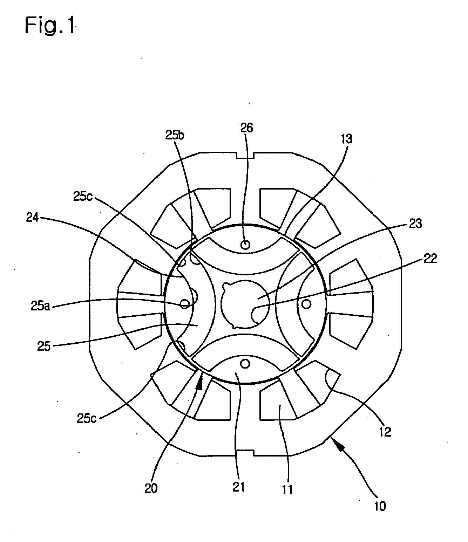

FIG. 1 is a cross sectional view illustrating the interior structure of a conventional interior permanent magnet synchronous motor. Referring to FIG. 1, the interior permanent magnet synchronous motor includes: an approximately cylindrical stator 10; and a rotor 20 rotatably received in the stator 10.

The stator 10 is a cylindrical stack of a plurality of laminated magnetic steel plates. A plurality of slots 12 are formed at an inner circumferential wall of the stator 10 so that they are equidistantly arranged in a circumferential direction of the stator 10. A plurality of coils 11 are wound between the adjacent slots 12. The rotor 20 includes a core 21, which is a cylindrical stack of a plurality of laminated magnetic steel plates. Here, each of the magnetic steel plates forms a core piece. The core 21 is centrally formed with an axial shaft hole 22, so that a rotating shaft 23 is press-fitted in the shaft hole 22 to simultaneously rotate with the rotor 20. Also, a plurality of permanent magnet holes 24 are formed around the center of the core 21 so that they are equidistantly arranged in a circumferential direction of the rotor 20. Into the permanent magnet holes 24 are accommodated a plurality of permanent magnets 25, respectively, to simultaneously rotate with the rotor 20.

With the above-described configuration, if electric current is applied to the coils 11 of the stator 10, the polarity of the coils 11 are changed in sequence. When the polarity of the coils 11 provided at the stator 10 is the same as the polarity of the permanent magnets 25 of the rotor 20, a repulsive force is generated between the stator 10 and the rotor 20. Conversely, when the polarity of the coils 11 of the stator 10 is different from the polarity of the permanent magnets 25 of the rotor 20, a traction force is generated between the stator 10 and the rotor 20. Both the repulsive force and the traction force, consequently, generate a centrifugal force, so that the rotor 20 generates a rotation drive force while simultaneously rotating with the rotating shaft 23.

Disadvantages of the interior permanent magnet synchronous motor having the above-described configuration includes the fact that the magnetization force, which is produced when the coils 11 of the stator 10 receive electric current, may be unbalanced with the magnetic reluctance of the permanent magnets 25 embedded in the rotor 20. This is the primary factor responsible for cogging phenomenon, causing torque ripple and vibrations of the rotating shaft 23.

According to a conventional solution to avoid the above phenomenon, after completing the lamination of the core pieces of the rotor 20, the stator 10 is provided with a skew of approximately one slot, in order to reduce torque ripple due to the inequality of magnetic reluctance caused in air gap regions.

However, providing the completely laminated rotor 20 with the provision of a skew of approximately one slot requires the use of separate equipment, resulting in an increase in processing costs. Further, since the rotor core assembly process for laminating the plurality of core pieces and a skew process must be performed separately, the above-described conventional interior permanent magnet motor suffers from a complicated manufacturing process.

It is an object of the present invention to provide an interior permanent magnet synchronous motor in which a rotor can be manufactured with a simplified process, thereby achieving an improvement in production yield, and a method for manufacturing the same.

It is another object of the present invention to provide an interior permanent magnet synchronous motor in which a rotor can be provided with a skew without separate equipment and processing, and a method for manufacturing the same.

In accordance with a first aspect of the present invention, the above and other objects can be accomplished by the provision of an interior permanent magnet synchronous motor comprising: a rotor of a type using four or more poles, the rotor having a core formed by laminating a plurality of rotor core pieces, each rotor core piece being drilled with a plurality of magnetic holes, both ends of the respective facing magnetic holes having asymmetrical shapes.

Preferably, the rotor may be centrally drilled with a shaft hole, and the plurality of magnetic holes may be centrally bulged toward the shaft hole.

Preferably, both the ends of the magnetic holes may have different inclination angles from one another, and the inclination angles of both the ends of the magnetic holes may be multiple numbers of a value obtained by dividing an angle between neighboring teeth of a stator by the number of poles of the rotor.

Preferably, based on one of the magnetic holes, the inclination angles of both the ends of the remaining magnetic holes may successively increase clockwise or counterclockwise to have values of α, 2α, 3α, .. , respectively, the value of α being obtained by dividing the angle between neighboring teeth of the stator by the number of poles of the rotor.

In accordance with a second aspect of the present invention, the above and other objects can be accomplished by the provision of a method for manufacturing an interior permanent magnet synchronous motor comprising: performing a press forming process for drilling a shaft hole at the center of a plurality of rotor core pieces, and a plurality of magnetic holes around the shaft hole so that both ends of the respective facing magnetic holes have asymmetrical shapes; laminating the plurality of rotor core pieces to form a rotor core; and embedding magnets into the magnetic holes of the formed rotor core, respectively.

Preferably, the plurality of magnetic holes may be centrally bulged toward the shaft hole via the press forming process.

Preferably, both the ends of the magnet holes have different inclination angles from one another, and the inclination angles of both the ends of the magnetic holes may be multiple numbers of a value obtained by dividing an angle between neighboring teeth of a stator by the number of poles of the rotor.

Preferably, based on one of the magnetic holes, the inclination angles of both the ends of the remaining magnetic holes may successively increase clockwise or counterclockwise to have values of α, 2α, 3α,.., respectively, the value of α being obtained by dividing the angle between neighboring teeth of the stator by the number of poles of the rotor.

According to the present invention as stated above, since both the ends of the magnetic holes, arranged face to face across the shaft hole, have asymmetrical shapes, the obtained rotor is capable of reducing torque ripple without requiring a separate skew process, resulting in a simplification in the overall manufacturing process of the rotor.

The above and other objects, features and other advantages of the present invention will be more clearly understood from the following detailed description taken in conjunction with the accompanying drawings, in which:
FIG. 1 is a cross sectional view illustrating the interior structure of an interior permanent magnet synchronous motor;
FIG. 2 is a plan view of a rotor core piece according to an embodiment of the present invention; and
FIG. 3 is a partial view of teeth of a stator, illustrating an inclination angle at both ends of a magnetic hole formed at the rotor core piece according to the embodiment of the present invention.

Now, a preferred embodiment of the present invention will be explained in detail with reference to the accompanying drawings. In the following description of the present invention, a detailed description of known functions and configurations incorporated herein will be omitted when it may make the subject matter of the present invention unclear.

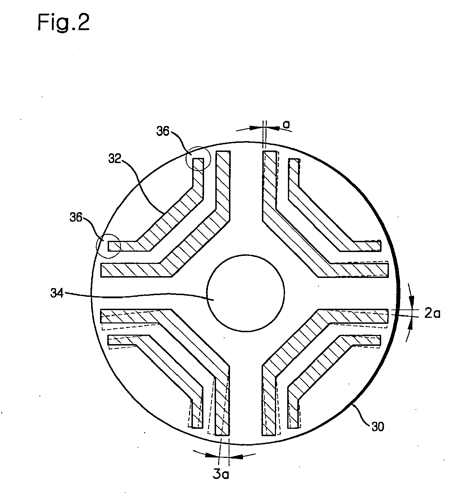

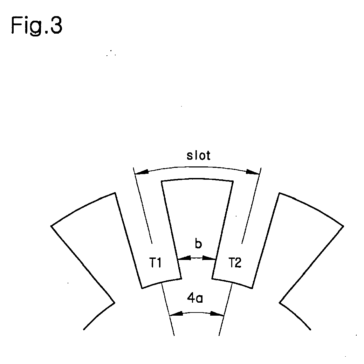

FIG. 2 is a plan view of a rotor core piece 30 according to an embodiment of the present invention. FIG. 3 is a partial view of teeth of a stator, illustrating an inclination angle at both ends of a magnetic hole formed at the rotor core piece according to the embodiment of the present invention.

Referring to FIG. 2, the rotor core piece 30 according to an embodiment of the present invention is centrally drilled with a shaft hole 34. A motor rotating shaft is press-fitted in the shaft hole 34 to simultaneously rotate with a rotor. The core piece 30 is also drilled with a plurality of magnetic holes 32 around the shaft hole 34 so that the magnetic holes 32 are arranged in a circumferential direction. Each of the magnetic holes 32 is centrally bulged toward the shaft hole 34. In this case, the outer circumference of the bulged center of the magnetic hole 32, facing the shaft hole 34, may have a zero curvature. Into the magnetic holes 32 are embedded magnets, respectively, to simultaneously rotate with the rotor. For reference, the magnet holes 32 may have various shapes provided by different manufactures. In the embodiment of the present invention, the shape of the magnetic hole 32 is determined based on a 4-pole rotor as shown in FIG. 2.

Now, the shape of the magnetic hole 32 will be explained with reference to FIG. 2. According to the present invention, the plurality of magnetic holes 32, drilled in the rotor core piece 30, have both ends 36 inclined, respectively. Further, both the inclined ends of the magnetic holes 32 have different inclination angles from one another. More specifically, based on any one of the magnetic holes 32, the remaining magnetic holes 32, which are successively arranged clockwise or counterclockwise from the basis magnetic hole 32, have inclination angles of **α**, 2**α**, and 3**α**, respectively. Here, as shown in FIG. 3, the inclination angle **α** has a value obtained by dividing an angle between neighboring teeth of the stator by the number of poles of the rotor (for example, 4 poles of the present embodiment).

The reason why both the ends 36 of the magnetic holes 32 formed at the rotor core piece 30 have different inclination angles from one another is to provide the permanent magnets with a skew without requiring a separate skew process.

That is, in the embodiment of the present invention, it is important that both the ends of the magnetic holes 32, arranged face to face across the shaft hole 34, have asymmetrical shapes. In this case, by simply laminating the asymmetrical magnetic holes 32, it is possible to provide the magnets, embedded in the magnetic holes 32, with a skew. The provision of a skew results in a reduction in vibrations and noise caused by cogging torque.

Hereinafter, a method for manufacturing a rotor by laminating the rotor core pieces 30 having the above-described configuration will be explained in detail. For the sake of convenience of explanation, only a process different from a general rotor manufacturing method will be explained.

To manufacture the rotor according to the embodiment of the present invention, first, the plurality of rotor core pieces 30 are prepared via a press forming process. In the press forming process, the shaft hole 34 is first drilled at the center of the rotor core pieces 30, and subsequently, the plurality of magnet holes 32 are drilled around the shaft hole 34 to be centrally bulged toward the shaft hole 34. The plurality of magnet holes 32 are circumferentially arranged, so that both the ends 36 of the facing magnetic holes 32 have asymmetrical shapes.

After completion of the press forming process, the plurality of rotor core pieces 30 are laminated one above another, to perform a rotor core forming process. As shown in FIG. 2, the rotor core, formed by laminating the plurality of rotor core pieces 30, have a plane structure wherein both the ends 36 of the magnetic holes 32, which are successively arranged clockwise from the basis magnetic hole 32, have inclination angles of α, 2α, and 3α, respectively. That is, the magnetic holes 32 are provided with a skew.

After completion of the rotor core forming process as stated above, magnets are embedded in the magnetic holes 32 of the rotor core, respectively.

As can be understood from the manufacturing method as stated above, the present invention eliminates the need of a separate process for providing the rotor with a skew of approximately one slot. This results in a simplification in the overall manufacturing process of the rotor.

As is apparent from the above description, the interior permanent magnet synchronous motor and a method for manufacturing the same according to the present invention has the following several advantages.

Firstly, according to the present invention, both ends of magnetic holes, which are arranged face to face across a shaft hole of a rotor, have asymmetrical shapes. With this configuration, by simply laminating the magnetic holes, it is possible to provide magnets embedded in the magnetic holes with a skew, without requiring a separate skew process. As a result, the rotor can be manufactured with a simplified process while achieving an enhancement in production yield.

Further, the present invention has no need for separate skew equipment, resulting in a reduction in manufacturing costs.

## Claims

1. An interior permanent magnet synchronous motor comprising:
a rotor of a type using four or more poles, the rotor having a core formed by laminating a plurality of rotor core pieces (30), each rotor core piece being drilled with a plurality of magnetic holes (32), both ends (36) of the respective facing magnetic holes (32) having asymmetrical shapes.

2. The motor as set forth in claim 1,
wherein the rotor is centrally drilled with a shaft hole (34), and
wherein the plurality of magnetic holes (32) are centrally bulged toward the shaft hole (34).

3. The motor as set forth in claim 1 or 2, wherein both the ends (36) of the magnetic holes (32) have different inclination angles from one another.

4. The motor as set forth in claim 3, wherein the inclination angles of both the ends (36) of the magnetic holes (32) are multiple numbers of a value obtained by dividing an angle between neighboring teeth of a stator by the number of poles of the rotor.

5. The motor as set forth in claim 4, wherein, based on one of the magnetic holes (32), the inclination angles of both the ends (36) of the remaining magnetic holes (32) successively increase clockwise or counterclockwise to have values of **α**, 2**α**, 3**α**,.., respectively, the value of α being obtained by dividing an angle between neighboring teeth of a stator by the number of poles of the rotor.

6. A method for manufacturing an interior permanent magnet synchronous motor comprising:
performing a press forming process for drilling a shaft hole (34) at the center of a plurality of rotor core pieces (30), and a plurality of magnetic holes (32) around the shaft hole (34) so that both ends (36) of the respective facing magnetic holes (32) have asymmetrical shapes;
laminating the plurality of rotor core pieces (30) to form a rotor core; and
embedding magnets into the magnetic holes (32) of the formed rotor core, respectively.

7. The method as set forth in claim 6, wherein the plurality of magnetic holes (32) are centrally bulged toward the shaft hole (34) via the press forming process.

8. The method as set forth in claim 6 or 7, wherein both the ends (36) of the magnet holes (32) have different inclination angles from one another.

9. The method as set forth in claim 8, wherein the inclination angles of both the ends (36) of the magnetic holes (32) are multiple numbers of a value obtained by dividing an angle between neighboring teeth of a stator by the number of poles of the rotor.

10. The method as set forth in claim 9, wherein, based on one of the magnetic holes (32), the inclination angles of both the ends (36) of the remaining magnetic holes (32) successively increase clockwise or counterclockwise to have values of **α**, 2**α**, 3**α**,.., respectively, the value of **α** being obtained by dividing an angle between neighboring teeth of a stator by the number of poles of the rotor.
